# EUROPEAN PATENT SPECIFICATION

(11) **EP 3 233 452 B1**
(45) Date of publication and mention of the grant of the patent: **06.03.2019**
(21) Application number: 15812945.2
(22) Date of filing: 15.12.2015
(51) Int. Cl.: B29D 30/00, B29C 37/00

(54) **TIRE HANDLING AND PROCESSING**
REIFENHANDHABUNG UND -VERARBEITUNG
MANIPULATION ET TRAITEMENT DE PNEUMATIQUES

(30) Priority: 16.12.2014 DK 201470785
(43) Date of publication of application: 25.10.2017
(73) Proprietor: BEUMER Group A/S, 8200 Århus N (DK)
(72) Inventor: LYKKEGAARD, Uffe, 8000 Aarhus C (DK); ROSENBERG, Jens, 8230 Åbyhøj (DK)
(74) Representative: Plougmann Vingtoft a/s
(86) International application number: PCT/DK2015/050394
(87) International publication number: WO 2016/095922

(56) References cited:
- EP-A1- 2 168 758
- JP-A- 2014 133 385
- US-A1- 2013 078 385

## Description

### FIELD OF THE INVENTION

The invention relates to handling and processing of tires, and in particular to handling and processing steps when manufacturing a tire.

### BACKGROUND OF THE INVENTION

Most tire manufacturing systems include a relatively high degree of more or less automated material handling and tire processing steps. Each of these steps must be carried out in a cost efficient manner, while assuring an optimum quality of the manufactured tire.

A tire manufacturing step of curing green tires carries one of the main costs in tire manufacturing, such as due to erroneous loading of green tires to the curing press, or cured green tires being difficult to extract from the curing press. This constitutes a risk of wasting both energy, raw materials as well as damaging the curing press itself. JP2014133385 discloses an apparatus and method for transporting tires, wherein the apparatus for transporting tires is configured in such a manner that a plurality of sliding free roller conveyors are disposed radially with respect to the center of rims and a plurality of centering paddles are mounted to the sliding free roller conveyors respectively.

USA201113245209 discloses a system that has a fluid delivery system that is provided with a spray gun for delivering a coating to the tire placed in the spray booth. A robot is provided for transporting the tire to the spray booth.

EP2168758 discloses a process that performs the operations of injecting a viscous sealant material onto the internal surface of a pneumatic tire after vulcanization molding and diffuses the sealant material into a sheet form by centrifugal force while rotating the pneumatic tire around the tire axis to thereby form a sealant layer.

Thus, it has been appreciated that an improved method of handling and processing tires in a tire production facility is of benefit, and in consequence, the present invention has been devised.

### SUMMARY OF THE INVENTION

It may be seen as an object of the present invention to provide an improved method of handling and processing tires in a tire production facility. Preferably, the invention alleviates, mitigates or eliminates one or more of the above or other disadvantages singly or in any combination. It may be seen as an object of the invention to provide a method of handling and processing tires in a tire production facility, which results in cost effective processing while assuring an optimum quality of the manufactured tire.

In particular, it may be seen as an object of the invention to provide a method and system for effective handling, transport and/or storage of the tires. More particularly, it may be seen as an object hereby also to provide a method and system, which reduces erroneous loading of green tires to the curing press, or reduces a number of, or even prevents, tires being difficult to extract from the curing press.

Accordingly, there is provided a method of handling and processing tires in a tire production facility, the method comprising
- a) positioning an uncured tire in a support for supporting the tire, where the support is provided with a through-going hole, and where the tire is positioned in the support so that the tire is lying with its centre opening centred or substantially centred with the through-going hole of the support,
- b) moving the support with the tire in a conveyor system, where the conveyor system comprises one or more conveyor sections with a friction drive device towards each side of the one or more conveyor sections, where the friction drive device is provided for moving the support in a moving direction by friction between the friction drive device and the support, and where friction drive devices towards each side leave an open through-going space in a middle of the conveyor section,
- c) stopping the support with the tire from moving in the moving direction at such a conveyor section provided with an applicator station with an applicator,
- d) positioning the support with the tire relative to the applicator and so that an applicator head of the applicator is able to apply a substance on a surface of the tire, and where
method step d) is provided by raising the applicator head up in the open through-going space and in an upward direction from below the conveyor section, and using the open through-going space and the through-going hole of the support, so as to enable positioning of the applicator head relative to the surface of the tire and for the applicator head to apply the substance on the surface.

Thus, an improved method of handling and processing tires in a tire production facility is provided. The improvement may be seen to lie in the insight disclosed herein, that by utilising a support for the tire as described, one or more conveyor sections as described and the applicator as described, cost effective processing assuring an optimum quality of the manufactured tire can be provided.

In particular, it is an insight that the method and system disclosed herein will reduce or even make it possible to prevent erroneous loading of green tires to the curing press, and/or reduce a number of, or even prevent, tires being difficult to extract from the curing press.

Green tires are relatively vulnerable, but nevertheless they have to be transported from a tire building machine and to the curing press. Prior to arriving at the curing press, typical tire manufacturing includes application of a substance on the surface of the tire. By using the described method, the green tires can be handled gently and the substance applied effectively.

The use of an automated material handling system utilising supports etc. as described herein makes it possible to convey the actual support holding the tire, making automation possible all the way at least to, and possibly also from, the curing presses to eliminate unnecessary gripping and manipulation of the tire.

According to a preferred embodiment, the method and system as described herein is provided for applying the substance to an inner surface of the tire. But, as further described herein, the method and system may be adapted so as alternatively or additionally to provide the substance to the outer surface of the tire.

When the method steps c) and/or d) are carried out while the tire is still positioned in the support and/or remains on the conveyor section, the effectiveness of the method and system is even further improved.

When a support surface of the support has a tapered form, an advantage is that various sizes of tires can be handled by the conveyor system in the support and/or that the tire remains at a given position in the support.

According to an embodiment of the invention, the through-going hole is provided in a centre or substantially in the centre of the support.

According to an embodiment of the invention, the tire is rotated around a vertical or substantially vertical axis through the centre of the tire while applying the substance. An alternative to this, although possibly less preferred, is to rotate the applicator or to rotate the applicator head. Alternatively, the applicator head may be provided so as to be able to apply the substance all around the 360 degrees surface of the tire without rotating the tire or the applicator head. This may e.g. be provided by a distribution of applicator heads, and/or openings for the substance, pointing in all directions of the surface at once.

According to an embodiment of the invention, the support with the tire is rotated around the vertical or substantially vertical axis while applying the substance. When the rotation is provided by engaging and rotating the support, this is a possible way of rotating the tire without being in contact with the tire itself.

A preferred embodiment of the invention is when the support is used for the tire to be stored for a period of time while being positioned in the support. Such period of time may include where the tire with the substance applied to its surface is allowed to dry in the support while the support is positioned stationary or moved in the conveyor system, and e.g. before being cured in the curing press. According to an apparatus aspect of the invention there is provided a conveyor system adapted to carry out the method according to any of the method claims. By referring to an advantage herein, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention which is defined by the appended claims.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 illustrates a plurality of conveyor sections,
FIG. 2 shows a support for supporting a tire,
FIG. 3 illustrates a conveyor section with the support for supporting a tire,
FIG. 4 illustrates the conveyor section with the support and a tire supported by the support,
FIG. 5 illustrates the conveyor section with the support and the tire supported by the support moving in a moving direction towards an applicator station,
FIG. 6 illustrates the support with the tire stopped and positioned above the applicator station,
FIG. 7 illustrates applying a substance to an inner surface of the tire at the applicator station,
FIGS. 8a-8c illustrate applying a substance to an outer surface of the tire at the applicator station, and
FIG. 9 is a perspective view of two conveyor sections each conveying a support with a tire.

### DESCRIPTION OF EMBODIMENTS

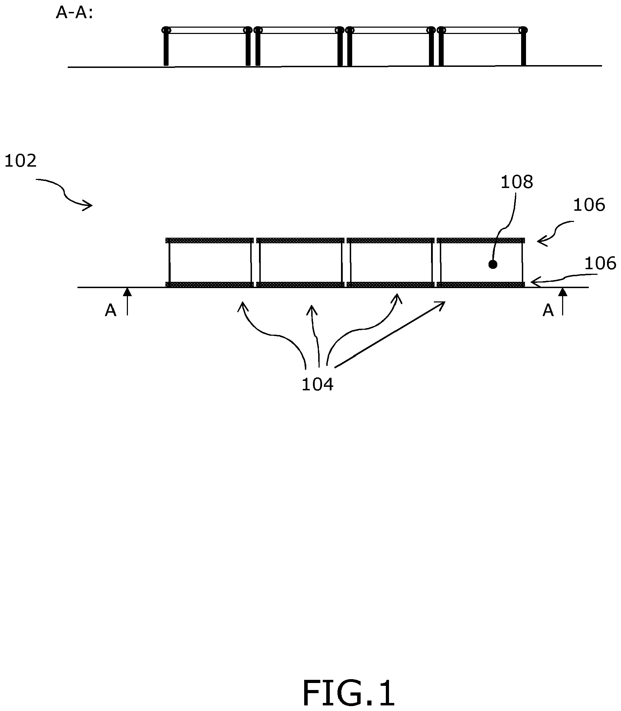

FIG. 1 illustrates a conveyor system 102 with four conveyor sections 104 in a top-view and in a side-view A-A. Each conveyor section is provided with a friction drive device 106 towards each side. The friction drive device is provided for moving material, such as a support for a tire, in a moving direction by friction between the friction drive device and the support. The friction drive devices towards each side leave an open through-going space 108 in a middle of the conveyor section. In the illustrated embodiment, the friction drive devices are conveyor strap belts.

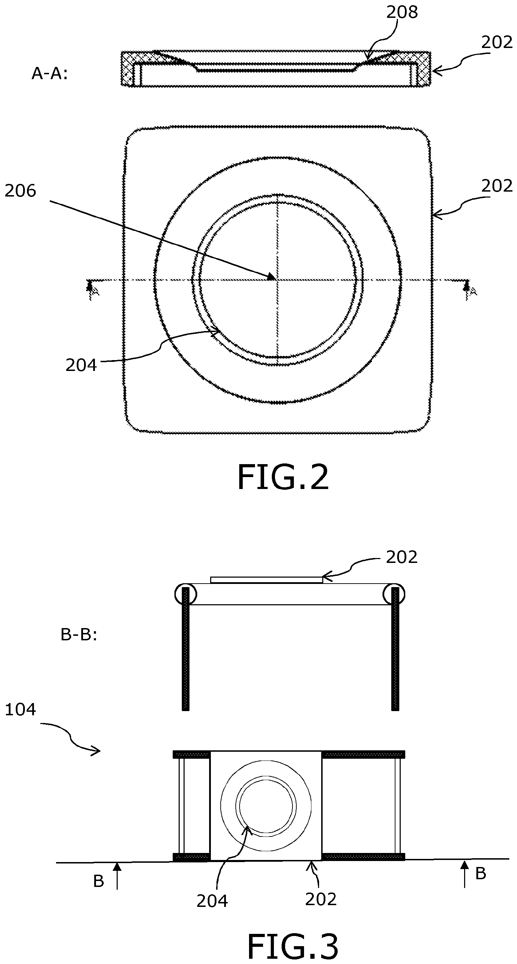

FIG. 2 shows a support 202 for supporting a tire in a top view and a cross-sectional view along the line A-A. The support is provided with a width suited to fit the conveyor sections by which it is to be conveyed. The illustrated support is provided for individual transport of a tire, but may alternatively be provided for transport of two or more tires, such as in tandem after each other in a conveying direction. When a support comprises two support surfaces, two tires positioned in the support may be processed at once.

The support 202 is provided with a through-going hole 204 with a centre 206. The support is adapted so that a tire can be positioned horizontally in the support, and preferably for the tire to be lying with its centre opening centred or substantially centred with the centre 206 of the through-going hole 204 of the support. In the illustrated embodiment of the support, the through-going hole is circular.

In a Tire Tray System, where each tray is referred to herein as the support 202, it is a principle to enable loading each tire into the dedicated, protective support 202 for transporting the tire. This can e.g. be carried out at a tire building machine (not shown). Each tire can be loaded to a support, e.g. manually or using a robot-aided tire gripping and loading device. Preferably, this loading centres the tire in the support. However, the tire may alternatively or additionally be centred or re-centred, before being loaded into the curing press.

The support 202 is preferably designed to enable handling of tires of different sizes. In the described embodiment, the support has a tapered or cone-shaped supporting surface 208 in the centre of the support. The tapered support surface can be provided as an insert shaped in metal, plastics or composite suitable for receiving and carrying the tire. The tire may be up to about 150-175 degrees Celsius, e.g. when being extracted from the curing press, but normally the temperature is below 50 degrees Celsius when the tire is loaded into the support. The tapered form may alternatively be provided as a build-in part of the support, such as of a monolithic support. The form and size of the supporting surface 208 is chosen so that a number of different sized tires can be positioned in the support.

Supporting the tire, and especially a green tire in such support, enhances flexibility within a tire manufacturing process and ensures that the tire experiences a minimum of physical contact, except with the support 202.

The supports 202 can be provided so as to be conveyable on top of each other. This can be provided when they are empty, or e.g. when a lowermost support is empty. Two supports may also be positioned on top of each other when at least the upper is carrying a tire. This may, or may not, require additional elements for the support, or require additional elements comprised in the supports. Such elements may be one or more spacers between the supports. Such one or more spacers should be adapted so as to support an upper support on a lower support by the one or more spacers, and without using the tire on the lower support for this purpose.

FIG. 3 illustrates a conveyor section 104, the support 202 with the through-going hole 204 in a top view and a side view B-B.

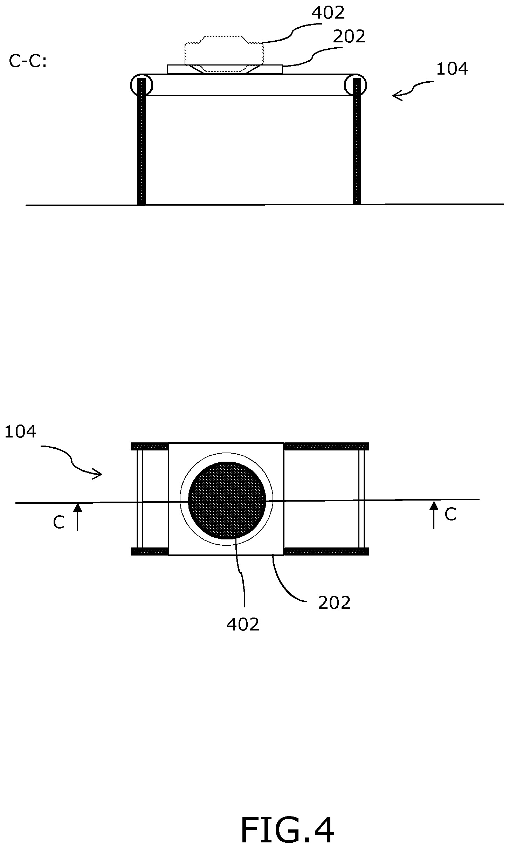

FIG. 4 illustrates the conveyor section 104 with the support 202 and a green tire 402 supported by the support in a top-view and a cross-sectional view C-C along the line and direction shown in the top view.

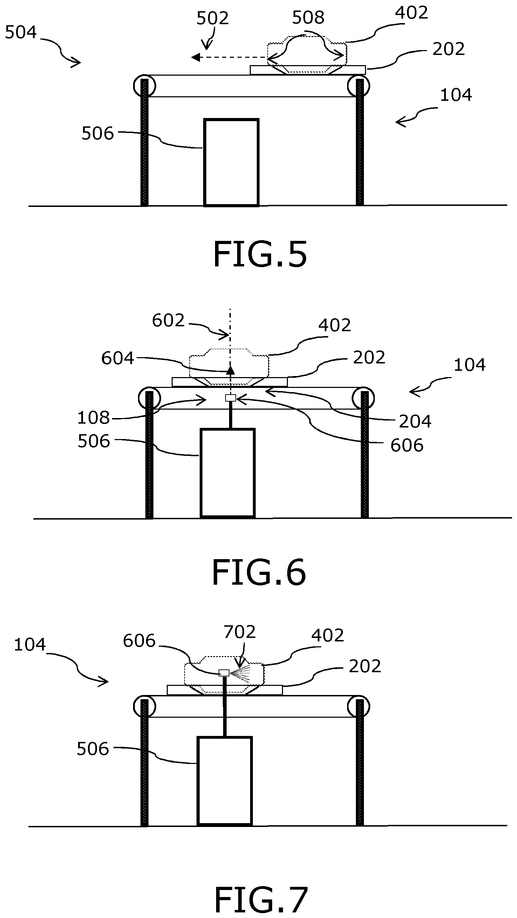

FIGS. 5-8c are cross-sectional views. FIG. 5 illustrates the conveyor section 104 with the support 202 and the tire 402 supported by the support. The support is moving in a moving direction 502 by the conveyor section towards an applicator 506 at an applicator station 504. The tire 402 has an inner surface 508.

FIG. 6 illustrates that the support 202 with the tire 402 has been stopped and is positioned above the applicator 506. The applicator is adapted for applying a substance to the inner surface 508 of the tire. It is illustrated that the support with the tire has been stopped so that an applicator head 606 of the applicator is centred or substantially centred with the centre of the tire 402. It is illustrated that the applicator head 606 is being raised up in the open through-going space 108 in an upward direction 604 from below the conveyor section 104, and towards the through-going hole 204 of the support 202.

In FIG. 7 the applicator head 606 of the applicator 506 has been moved further upwards, so as to be positioned inside the tire and so as to enable applying a substance 702 on the inner surface 508 of the tire 402. In the shown embodiment, this is carried out while the tire 402 is positioned in the support 202. In the embodiment, the substance 702 is a sprayable release agent. The release agent is preferably a water-based solvent for preventing the inner of the tire of tacking or adhering to a rubber curing bladder in a later tire manufacturing process step.

The described type of conveyor section 104 with the applicator 506, can be part of an at least partly automated tire manufacturing system or plant, where transport of the tires to and from various parts and stations of such system includes conveyor transport of the tires. At the applicator station, the tire 402 on the support 202 can be identified by reading a barcode, or e.g. by providing the support 202 with an unique identifier, such as a radio frequency identifyable tag, and using a control system to correlate a given type of tire to a support using the identifier. Hereby the spraying process may be controlled, e.g. in response to the size of the tire on a given support 202.

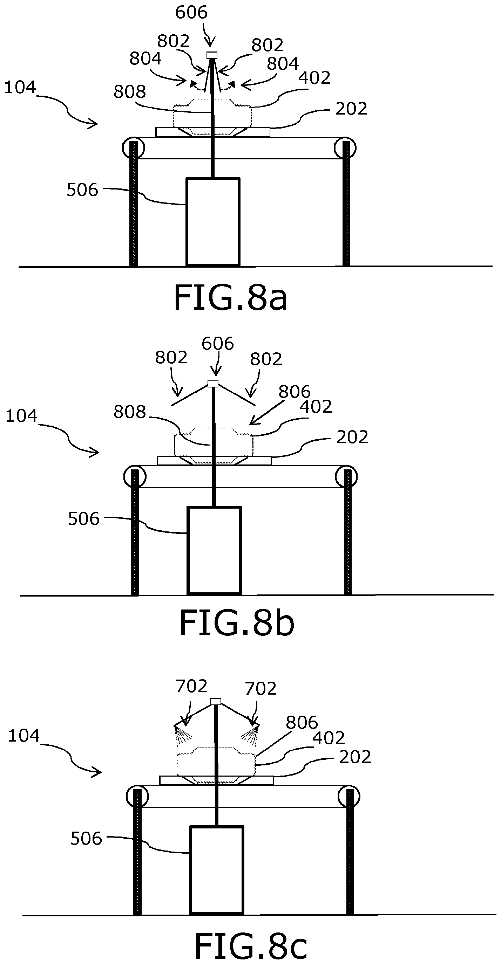

FIGS. 8a-8c illustrate an alternative embodiment of the applicator 506. In this embodiment, the applicator head 606 comprises one or more extendable and/or pivotable arms 802. In the shown embodiment, the arms are pivoted from the applicator head provided on a main arm 808 of the applicator.

In FIG. 8a the applicator head 606 has been raised upwards through the opening in the tire, and the two arms 802 are in the process of being pivoted from the main arm 808 in the direction 804. In FIG. 8b the arms 802 have been pivoted to a position where the substance 702 can be applied to the outer surface 806 of the tire 402 as illustrated in FIG. 8c. After application of the substance 702, the arms can be pivoted back again, so as to enable the main arm 808 with the applicator head 606 to be lowered down again. In order for the other side towards the support of the outer surface to have substance applied to it, the tire may be flipped over and/or lifted, to enable applying the substance 702 to the other side of the outer surface 806. A method step of applying the substance to the inner surface 508 as illustrated and described in figures 5-7, may also be followed by applying the substance to the outer surface 806 as described herein.

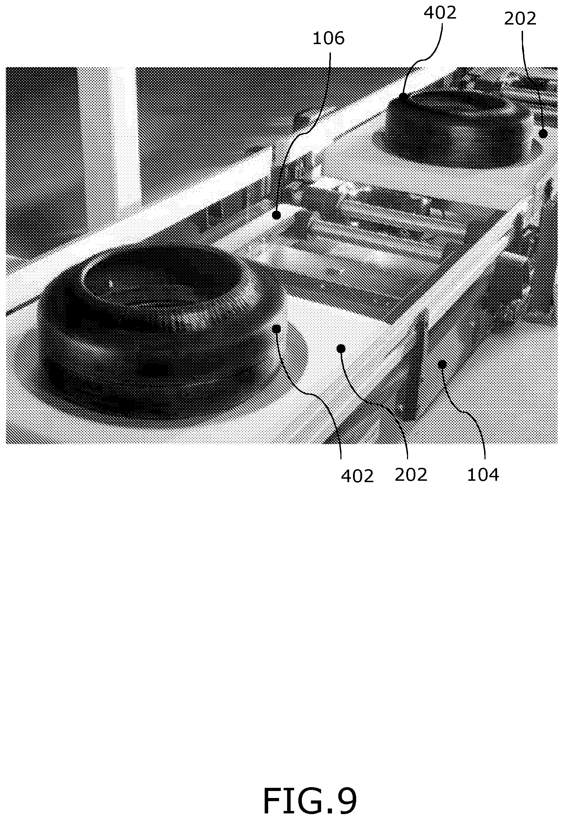

FIG. 9 is a perspective view of two conveyor sections 104 as illustrated and disclosed herein, each conveying a support 202 with a tire 402. Such conveyor sections can be part of a tire manufacturing system, where the tires are positioned and transported in the supports 202. A long-term or short-term storage or buffer for the tires can be included in such tire manufacturing system. Preferably the tires are still positioned in the supports 202 when being stored or buffered. Such buffer or storage can e.g. be used for storing the green tires after a tire building machine and prior to a process step of curing the green tires.

The storage can also serve as a drying buffer for green tires after the application of e.g. release agent fluids at the applicator station. The storage can be based on miniloader technology and can provide access to any tire at any time. This can e.g. allow the oldest tire of a given specification to be extracted from the storage first using the First-In-First-Out (FIFO) principle. The storage can also provide immediate extraction of specific tires, e.g. due to an unforeseen event.

In short, there is herein disclosed a method of handling and processing tires in a tire production facility. In order, e.g. to reduce erroneous loading of green tires or cured tires being difficult to extract from the curing press, the method includes positioning an uncured tire 402 in a support 202 and moving the support with the tire in a conveyor system 102. The conveyor system comprises one or more conveyor sections 104 with a friction drive device 106 towards each side where the friction drive devices leave an open through-going space 108 in a middle of the conveyor section. The support 202 with the tire is stopped relative to an applicator so that an applicator head 606 is able to apply a substance 702 on a surface 508, 806 of the tire. This is provided by raising the applicator head 606 up in said open through-going space and in an upward direction 604 from below the conveyor section.

Although the present invention has been described in connection with preferred embodiments, it is not intended to be limited to the specific form set forth herein. Rather, the scope of the present invention is limited only by the accompanying claims.

## Claims

1. A method of handling and processing tires in a tire production facility, the method comprising
- a) positioning an uncured tire (402) in a support (202) for supporting the tire, where the support is provided with a through-going hole (204), and where said tire is positioned in the support so that the tire is lying with its centre opening centred or substantially centred with the through-going hole of the support,
- b) moving the support with said tire in a conveyor system (102), where the conveyor system comprises one or more conveyor sections (104) with a friction drive device (106) towards each side of the one or more conveyor sections, where the friction drive device is provided for moving the support in a moving direction (502) by friction between the friction drive device and the support, and where friction drive devices towards each side leave an open through-going space (108) in a middle of the conveyor section,
- c) stopping the support (202) with said tire (402) from moving in the moving direction (502) at such a conveyor section (104) provided with an applicator station (504) with an applicator (506),
- d) positioning the support with the tire relative to the applicator and so that an applicator head (606) of the applicator (506) is able to apply a substance (702) on a surface (508, 806) of said tire, and where method step d) is provided by raising the applicator head (606) up in said open through-going space and in an upward direction (604) from below the conveyor section, and using said open through-going space (108) and said through-going hole (204) of the support, so as to enable positioning of the applicator head (606) relative to the surface (508, 806) of the tire and for said applicator head (606) to apply the substance (702) on said surface (508, 806).

2. The method according to claim 1, where the surface comprises an inner surface (508) of the tire.

3. The method according to any of the preceding claims, where the surface comprises an outer surface (806) of the tire.

4. The method according to any of the preceding claims, where method steps c) and/or d) are carried out while said tire (402) is positioned in said support (202).

5. The method according to any of the preceding claims, where a support surface (208) of said support (202) has a tapered form.

6. The method according to any of the preceding claims, where the through-going hole (204) with a centre (206) is provided in a centre or substantially in the centre of the support (202).

7. The method according to any of the preceding claims, where said tire (402) is rotated around a vertical or substantially vertical axis (602) through the centre of the tire while applying the substance (702).

8. The method according to claim 7, where said support (202) with said tire (402) is rotated around the vertical or substantially vertical axis (602) while applying the substance (702).

9. The method according to claim 7 or 8, where said rotation is provided by engaging and rotating the support (202).

10. The method according to any of the preceding claims, where said substance (702) is sprayable.

11. The method according to any of the preceding claims, where said substance (702) is a release agent.

12. The method according to claim 11, where said release agent is provided on the surface (508, 806) for preventing the surface of the uncured tire of adhering to a bladder used in a later tire curing process step.

13. The method according to any of the preceding claims, where said tire (402) is stored for a period of time while the support with the tire is positioned stationary or moved in the conveyor system.

14. The method according to any of the preceding claims, where said tire (402) with the substance applied to its surface is allowed to dry for a period of time while being positioned in the support (202) and before being cured.

15. The method according to any of the preceding claims, where the friction device (106) towards each side of the one or more conveyor sections (104) is a conveyor strap belt.

16. The method according to any of the preceding claims, where said tire (402) is a green tire until being cured in a curing process.

17. A conveyor system adapted to carry out the method according to any of the preceding claims, where the conveyor system comprises
- a plurality of supports (202) for positioning uncured tires (402), and where a support is provided with a through-going hole (204) where a tire can be positioned in the support so that the tire is lying with its centre opening centred or substantially centred with the through-going hole of the support,
- one or more conveyor sections (104) with a friction drive device (106) towards each side of the one or more conveyor sections, where the friction drive device is provided for moving the support in a moving direction (502) by friction between the friction drive device and the support, and where friction drive devices towards each side leave an open through-going space (108) in a middle of the conveyor section,
- an applicator station (504) with an applicator (506), and where the conveyor system is adapted to position the support with the tire relative to the applicator so that an applicator head (606) of the applicator (506) is able to apply a substance (702) on a surface (508, 806) of said tire, and where the applicator is adapted to raise the applicator head (606) up in said open through-going space in an upward direction (604) from below the conveyor section, by using said open through-going space (108) and said through-going hole (204) of the support, so as to enable positioning of the applicator head (606) relative to the surface (508, 806) of the tire and for said applicator head (606) to apply the substance (702) on said surface (508, 806).

## Patentansprüche

1. Verfahren zum Handhaben und Verarbeiten von Reifen in einer Reifenherstellungseinrichtung, wobei das Verfahren Folgendes umfasst:
- a) Positionieren eines nicht ausgehärteten Reifens (402) in einer Stütze (202) zum Stützen des Reifens, wobei die Stütze über ein Durchgangsloch (204) verfügt und wobei der Reifen so in der Stütze positioniert ist, dass der Reifen mit seiner mittigen Öffnung mittig oder im Wesentlichen mittig an dem Durchgangsloch der Stütze liegt,
- b) Bewegen der Stütze mit dem Reifen in einem Beförderungssystem (102), wobei das Beförderungssystem einen oder mehrere Beförderungsabschnitte (104) mit einer Friktionsantriebsvorrichtung (106) in Richtung von jeder Seite von dem einen oder den mehreren Beförderungsabschnitten umfasst, wobei die Friktionsantriebsvorrichtung zum Bewegen der Stütze in einer Bewegungsrichtung (502) durch Reibung zwischen der Friktionsantriebsvorrichtung und der Stütze bereitgestellt ist, und wobei Friktionsantriebsvorrichtungen in Richtung von jeder Seite einen offenen Durchgangsraum (108) in einer Mitte des Beförderungsabschnitts hinterlassen,
- c) Stoppen der Stütze (202) mit dem Reifen (402) aus der Bewegung in der Bewegungsrichtung (502) an einem derartigen Beförderungsabschnitt (104), der mit einer Applikatorstation (504) mit einem Applikator (506) versehen ist,
- d) Positionieren der Stütze mit dem Reifen relativ zu dem Applikator und so, dass ein Applikatorkopf (606) des Applikators (506) in der Lage ist, eine Substanz (702) auf eine Oberfläche (508, 806) des Reifens aufzutragen, und wobei der Verfahrensschritt d) durch Anheben des Applikatorkopfs (606) in dem offenen Durchgangsraum und in einer Aufwärtsrichtung (604) von unterhalb des Beförderungsabschnitts und Verwenden des offenen Durchgangsraums (108) und des Durchgangslochs (204) der Stütze, um so ein Positionieren des Applikatorkopfs (606) relativ zu der Oberfläche (508, 806) des Reifens und für den Applikatorkopf (606) ermöglichen, um die Substanz (702) auf der Oberfläche (508, 806) aufzutragen, bereitgestellt ist.

2. Verfahren nach Anspruch 1, wobei die Oberfläche eine innere Oberfläche (508) des Reifens umfasst.

3. Verfahren nach einem der vorhergehenden Ansprüche, wobei die Oberfläche eine äußere Oberfläche (806) des Reifens umfasst.

4. Verfahren nach einem der vorhergehenden Ansprüche, wobei die Verfahrensschritte c) und/oder d) ausgeführt werden, während der Reifen (402) in der Stütze (202) positioniert ist.

5. Verfahren nach einem der vorhergehenden Ansprüche, wobei eine Stützfläche (208) der Stütze (202) eine konische Form aufweist.

6. Verfahren nach einem der vorhergehenden Ansprüche, wobei das Durchgangsloch (204) mit einer Mitte (206) in einer Mitte oder im Wesentlichen in der Mitte der Stütze (202) bereitgestellt ist.

7. Verfahren nach einem der vorhergehenden Ansprüche, wobei sich der Reifen (402) um eine vertikale oder im Wesentlichen vertikale Achse (602) durch die Mitte des Reifens dreht, während die Substanz (702) aufgetragen wird.

8. Verfahren nach Anspruch 7, wobei sich die Stütze (202) mit dem Reifen (402) um die vertikale oder im Wesentlichen vertikale Achse (602) dreht, während die Substanz (702) aufgetragen wird.

9. Verfahren nach Anspruch 7 oder 8, wobei die Drehung durch Eingreifen und Drehen der Stütze (202) bereitgestellt ist.

10. Verfahren nach einem der vorhergehenden Ansprüche, wobei die Substanz (702) sprühfähig ist.

11. Verfahren nach einem der vorhergehenden Ansprüche, wobei die Substanz (702) ein Trennmittel ist.

12. Verfahren nach Anspruch 11, wobei das Trennmittel auf der Oberfläche (508, 806) bereitgestellt ist, um zu verhindern, dass die Oberfläche des nicht ausgehärteten Reifens an einer Blase, die in einem späteren Reifenaushärtungsprozessschritt verwendet wird, anhaftet.

13. Verfahren nach einem der vorhergehenden Ansprüche, wobei der Reifen (402) über einen Zeitraum aufbewahrt wird, während die Stütze mit dem Reifen stationär positioniert ist oder in dem Beförderungssystem bewegt wird.

14. Verfahren nach einem der vorhergehenden Ansprüche, wobei der Reifen (402) mit der auf seine Oberfläche aufgetragenen Substanz über einen Zeitraum trocknen kann, während er in der Stütze (202) positioniert ist und bevor er aushärtet.

15. Verfahren nach einem der vorhergehenden Ansprüche, wobei der Friktionsantrieb (106) in Richtung von jeder Seite des einen oder der mehreren Beförderungsabschnitte (104) ein Förderband ist.

16. Verfahren nach einem der vorhergehenden Ansprüche, wobei der Reifen (402) ein Reifenrohling ist, bis er in einem Aushärtungsprozess ausgehärtet wird.

17. Beförderungssystem, das dazu angepasst ist, das Verfahren nach einem der vorhergehenden Ansprüche auszuführen, wobei das Beförderungssystem Folgendes umfasst:
- eine Vielzahl von Stützen (202) zum Positionieren von nicht ausgehärteten Reifen (402), und wobei eine Stütze über ein Durchgangsloch (204) verfügt, wobei ein Reifen so in der Stütze positioniert werden kann, dass der Reifen mit seiner mittigen Öffnung mittig oder im Wesentlichen mittig an dem Durchgangsloch der Stütze liegt,
eine oder mehrere Beförderungsabschnitte (104) mit einer Friktionsantriebsvorrichtung (106) in Richtung von jeder Seite von dem einen oder den mehreren Beförderungsabschnitten, wobei die Friktionsantriebsvorrichtung zum Bewegen der Stütze in einer Bewegungsrichtung (502) durch Reibung zwischen der Friktionsantriebsvorrichtung und der Stütze bereitgestellt ist, und wobei Friktionsantriebsvorrichtungen in Richtung von jeder Seite einen offenen Durchgangsraum (108) in einer Mitte des Beförderungsabschnitts hinterlassen,
- eine Applikatorstation (504) mit einem Applikator (506), und wobei das Beförderungssystem dazu angepasst ist, die Stütze mit dem Reifen relativ zu dem Applikator zu positionieren, sodass ein Applikatorkopf (606) des Applikators (506) in der Lage ist, eine Substanz (702) auf eine Oberfläche (508, 806) des Reifens aufzutragen, und wobei der Applikator dazu angepasst ist, den Applikatorkopf (606) in dem offenen Durchgangsraum und in einer Aufwärtsrichtung (604) von unterhalb des Beförderungsabschnitts und durch Verwenden des offenen Durchgangsraums (108) und des Durchgangslochs (204) der Stütze anzuheben, um so ein Positionieren des Applikatorkopfs (606) relativ zu der Oberfläche (508, 806) des Reifens und für den Applikatorkopf (606) zu ermöglichen, um die Substanz (702) auf der Oberfläche (508, 806) aufzutragen.

## Revendications

1. Procédé de manipulation et de traitement de pneumatiques dans une installation de production de pneumatiques, ledit procédé comprenant
- a) le positionnement d'un pneu non vulcanisé (402) dans un support (202) pour supporter le pneu, ledit support étant doté d'un trou traversant (204), et ledit pneu étant positionné dans le support afin que le pneu soit couché avec son ouverture centrale centrée ou sensiblement centrée avec le trou traversant du support,
- b) le déplacement du support avec ledit pneumatique dans un système de transporteur (102), ledit système de transporteur comprenant une ou plusieurs sections de transporteur (104) avec un dispositif d'entraînement par frottement (106) vers chaque côté de la ou des sections de transporteur, ledit dispositif d'entraînement par frottement étant prévu pour déplacer le support selon une direction de déplacement (502) par frottement entre le dispositif d'entraînement par frottement et le support et lesdits dispositifs d'entraînement par frottement vers chaque côté laissant un espace traversant ouvert (108) au milieu de la section de transporteur,
- c) l'arrêt du déplacement du support (202) avec ledit pneumatique (402) selon la direction de déplacement (502) au niveau de la section de transporteur (104) dotée d'une station d'applicateur (504) avec un applicateur (506),
- d) le positionnement du support avec le pneumatique par rapport à l'applicateur et afin qu'une tête d'applicateur (606) de l'applicateur (506) puisse appliquer une substance (702) sur une surface (508, 806) dudit pneumatique, et ladite étape d) du procédé étant obtenue en élevant la tête de l'applicateur (606) jusqu'à l'intérieur dudit espace traversant et selon une direction vers le haut (604) à partir du dessous de la section de transporteur et en utilisant ledit espaces traversant ouvert (108) et ledit trou traversant (204) du support, de façon à permettre le positionnement de la tête d'applicateur (606) par rapport à la surface (508, 806) du pneumatique et pour que ladite tête d'applicateur (606) applique la substance (702) à ladite surface (508, 806).

2. Procédé selon la revendication 1, ladite surface comprenant une surface interne (508) du pneumatique.

3. Procédé selon l'une quelconque des revendications précédentes, ladite surface comprenant une surface externe (806) du pneumatique.

4. Procédé selon l'une quelconque des revendications précédentes, lesdites étapes c) et/ou d) du procédé étant effectuées tandis que ledit pneumatique (402) est positionné dans ledit support (202).

5. Procédé selon l'une quelconque des revendications précédentes, ladite surface de support (208) dudit support (202) possédant une forme conique.

6. Procédé selon l'une quelconque des revendications précédentes, ledit trou traversant (204) avec un centre (206) étant disposé dans le centre ou sensiblement dans le centre du support (202).

7. Procédé selon l'une quelconque des revendications précédentes, ledit pneumatique (402) tournant autour d'un axe (602) vertical ou sensiblement vertical à travers le centre du pneumatique tandis que la substance (702) est appliquée.

8. Procédé selon la revendication 7, ledit support (202) avec ledit pneu (402) tournant autour de l'axe (602) vertical ou sensiblement vertical tandis que la substance (702) est appliquée.

9. Procédé selon la revendication 7 ou 8, ladite rotation est obtenue en mettant en prise et en rotation le support (202).

10. Procédé selon l'une quelconque des revendications précédentes, ladite substance (702) pouvant être pulvérisée.

11. Procédé selon l'une quelconque des revendications précédentes, ladite substance (702) étant un agent anti-adhérant.

12. Procédé selon la revendication 11, ledit agent anti-adhérant étant disposé sur la surface (508, 806) pour empêcher la surface du pneumatique non vulcanisé d'adhérer à une vessie utilisée dans une étape de vulcanisation de pneumatique ultérieure.

13. Procédé selon l'une quelconque des revendications précédentes, ledit pneumatique (402) étant stocké pendant un laps de temps tandis que le support avec le pneumatique est positionné de manière immobile ou déplacé dans le système de transporteur.

14. Procédé selon l'une quelconque des revendications précédentes, ledit pneumatique (402) avec la substance appliquée à sa surface étant mis à sécher pendant un laps de temps tout en étant positionné dans le support (202) et avant d'être vulcanisé.

15. Procédé selon l'une quelconque des revendications précédentes, ledit dispositif de frottement (106) vers chaque côté de la ou des sections de transporteur (104) étant une courroie de bande de transporteur.

16. Procédé selon l'une quelconque des revendications précédentes, ledit pneumatique (402) étant un pneumatique brut jusqu'à ce qu'il soit vulcanisé durant un procédé de vulcanisation.

17. Système de transporteur adapté pour réaliser le procédé selon l'une quelconque des revendications précédentes, ledit système de transporteur comprenant
- une pluralité de supports (202) permettant le positionnement de pneumatiques non-vulcanisés (402) et un support étant doté d'un trou traversant (204) où un pneumatique peut être positionné dans le support afin que le pneumatique soit couché avec son ouverture centrale centrée ou sensiblement centrée avec le trou traversant du support,
- une ou plusieurs sections de transporteur (104) avec un dispositif d'entraînement par frottement (106) vers chaque côté de la ou des sections de transporteur, ledit dispositif d'entraînement par frottement étant prévu pour déplacer le support selon une direction de déplacement (502) par frottement entre le dispositif d'entraînement par frottement et le support, lesdits dispositifs d'entraînement par frottement vers chaque côté laissant un espace traversant ouvert (108) au milieu de la section de transporteur,
- une station d'applicateur (504) avec un applicateur (506), et ledit système de transporteur étant adapté pour positionner le support avec le pneumatique par rapport à l'applicateur afin qu'une tête d'applicateur (606) de l'applicateur (506) puisse appliquer une substance (702) sur une surface (508, 806) dudit pneu, et ledit applicateur étant adapté pour élever la tête d'applicateur (606) jusqu'à l'intérieur dudit espace traversant ouvert selon une direction vers le haut (604) à partir de la section de transporteur, en utilisant ledit espace traversant ouvert (108) et ledit trou traversant (204) du support, de façon à permettre le positionnement de la tête d'applicateur (606) par rapport à la surface (508, 806) du pneumatique et pour que la tête d'applicateur (606) applique la substance (702) sur ladite surface (508, 806).
